# EUROPEAN PATENT APPLICATION

(11) **EP 4 733 575 A1**
(43) Date of publication of application: **29.04.2026**
(21) Application number: 24209022.3
(22) Date of filing: 25.10.2024
(51) Int. Cl.: F03D 1/06, F03D 80/00

(54) **WIND TURBINE AND INTERMEDIATE COVER**

(71) Applicant: Nordex Energy SE & Co. KG, 22419 Hamburg (DE)
(72) Inventor: Sidorov, Gennady, Hamburg (DE); Schaale, Thomas, Hamburg (DE); Baum, Sebastian, Hamburg (DE); Kathoefer, Sebastian, Hamburg (DE)
(74) Representative: Völkl Siebenson Patentanwälte - Partnerschaft mbB

(57) **Abstract**

The invention concerns a wind turbine (100), comprising
- a rotor hub (112) with a spinner (118), wherein the spinner (118) comprises a blade opening (124),
- a wind turbine rotor blade (110) which is inserted with its root portion (114) into the blade opening (124) and connected to the rotor hub (112),
- a rain deflector (200), the rain deflector (200) being arranged on an outer surface (130) of the wind turbine rotor blade (110) such that it surrounds the root portion (114) of the wind turbine rotor blade (110),
- an intermediate cover (300), which is configured to be arranged in a circumferential gap (126) between the spinner (118) and the rain deflector (200) in order to seal the circumferential gap (126) between the spinner (118) and the rain deflector (200) such that both the rain deflector (200) and the intermediate cover (300) prevent water from entering the rotor hub (112).

The invention also relates to an intermediate cover (300).

## Description

The invention concerns a wind turbine and an intermediate cover for a rotor hub

In a typical wind turbine, a nacelle mounted on a tower supports a rotor that comprises a rotor hub and a plurality of wind turbine rotor blades. Each wind turbine rotor blade is connected at its root end to the rotor hub via a pitch bearing, wherein the wind turbine rotor blade is directly connected to the pitch bearing or indirectly via an extender, wherein the extender is connected to the pitch bearing. The pitch bearing allows the wind turbine rotor blade to be rotated or "pitched" about its axis. The rotor hub may be completely or partially housed by a spinner which protects the rotor hub against environmental influences and improves the aerodynamic characteristics of the rotor.

Typically, a spinner includes a blade opening for each rotor blade through which the wind turbine rotor blade extends. Usually, the diameter the of blade openings in the spinner is a bit larger than the outer diameter of the rotor blades to allow a lateral movement of the wind turbine rotor blades during installation, i.e. moving each wind turbine rotor blade through the blade openings, and to allow the pitching of the rotor blade during operation of the wind turbine. As a result, once a wind turbine rotor blade is installed onto a pitch bearing, there remains an uncovered annular gap between the spinner and the outer surface of the respective wind turbine rotor blade.

In the case of maintenance or repair it can be necessary that the pitch bearing and/or the extender has to be disassembled and moved through the opening in the spinner. This can be done in a mounted state together with the rotor blade or one component after the other. Due to a bigger diameter of the pitch bearing and/or the extender the opening in the spinner needs to be designed with an even greater diameter, which leads to an even wider gap between the rotor blade and the spinner.

Through this gap, the rotor hub and the pitch bearing are exposed to the environment and are particularly vulnerable to water tracking along the rotor blade surface towards the root, and from there onto the rotor hub and pitch bearing. Further external influences can be, depending on the climatic zones, increased levels of air humidity, rain, snow, the presence of solid abrasive particles like sand, the presence of impurities, aggressive gases, and high salinity in the atmospheric air. These factors may negatively affect the components of the wind turbine and accelerate the development of corrosion and cause accelerated wear.

One object underlying the present invention is to reliably avoid or at least minimize the penetration of external factors into the gap between the spinner and the rotor blade.

This object is achieved by the independent claims and the respective sub-claims.

According to a first aspect, a wind turbine is disclosed. The wind turbine comprises a rotor hub with a spinner. The spinner covers the rotor hub. The spinner comprises a blade opening. The wind turbine comprises a wind turbine rotor blade which is inserted with its root portion into the blade opening and connected to the rotor hub. The wind turbine comprises a rain deflector, the rain deflector being arranged on an outer surface of the wind turbine rotor blade such that it surrounds the root portion of the wind turbine rotor blade. The wind turbine comprises an intermediate cover, which is configured to be arranged in a circumferential gap between the spinner and the rain deflector in order to seal the circumferential gap between the spinner and the rain deflector such that both the rain deflector and the intermediate cover prevent water from entering the rotor hub.

The inventive wind turbine provides a cover system comprising two components, namely a rain deflector and a separate intermediate cover, which interact together to effectively and efficiently prevent any unwanted substances to enter the spinner and the rotor hub. The inventive cover system allows for a high flexibility for installation at the spinner or rotor blade respectively. The disclosed cover system is suitable for different wind turbines, in particular for wind turbine rotor blades and spinners with different diameters resulting in different circumferential gaps between the spinner and the rotor blade. Exemplarily, an axial position of the rain deflector can be easily adapted, in order to ideally interact with the intermediate cover in a sealing manner. By providing a cover system with two components, in general, a wider gap as described above can be suitably sealed. On the other hand, this would not be possible with a single sealing component such as the rain deflector alone due to the size of the gap.

Further, due to the two components for the covering of the gap, any unevenness or manufacturing tolerances, e.g. at the outer surface of the root portion, can be compensated.

The intermediate cover is mounted to a component that is in a fixed connection with the rotor blade and turns together with the rotor blade and is a ring like or loop-like component. It has an edge interacting with resp. overlapping an edge of the spinner, which edge defines the blade opening. The intermediate cover may be a one-piece component, but is preferably comprised of several elements, which are interconnected. A multi-element intermediate cover provides flexibility for installation and mounting, in particular at the installation site of the wind turbine. The intermediate cover is made of any suitable material, preferable metal or metal-sheet.

Inserted with the root portion means that the rotor blade is at least partially inserted into the spinner with the root portion. In other words, the root portion at least partially protrudes out of the spinner.

According to an embodiment, the intermediate cover is connected to an inner ring of a pitch bearing or to an extender assembled between the rotor hub and the wind turbine rotor blade. The intermediate cover is fixedly connected to inner ring, either directly or indirectly via the extender. The intermediate cover is stationary with respect to the wind turbine rotor blade. In other words, the intermediate cover is installed to rotate together with the rotor blade and relative to the spinner, e.g. for a pitching movement of the rotor blade. Thus, the intermediate cover is not fixed to the spinner and therefore contributes to a safe and efficient sealing function, since the intermediate cover and the rain deflector are stationary with respect to each other.

According to an embodiment, the intermediate cover comprises one or more holding structures for connection to the inner ring of the pitch bearing or to the extender. A holding structure is, for example, a frame, a web, a mounting bracket or the like, which serves for a fixed and rigid connection of the intermediate cover to the pitch bearing or the extender.

According to an embodiment, the one or more holding structures are connected to the extender and via the extender with the inner ring of the pitch bearing. Thus, the intermediate cover is stably connected to the inner ring of the pitch bearing and can rotate together with the rotor blade as described above.

According to an embodiment, the intermediate cover is comprised of two or more cover segments which are joined end-to-end to form a loop. This facilitates the mounting process, in particular at the installation site of the wind turbine.

According to an embodiment, the intermediate cover comprises at least two or more holding structures, and wherein each of the holding structures interconnects two cover segments. Thus, the holding structures provide at least two functions, namely securing the intermediate cover to the rotor hub and connecting to adjacent cover segments to stabilize the shape of the intermediate cover.

According to an embodiment, the intermediate cover comprises one or more beads. The one or more beads provide stability to the intermediate cover or its cover segments respectively, by being reinforcement structures.

According to an embodiment, the rain deflector at least partly overlaps the intermediate cover. Partly overlapping means that not necessarily the entire rain deflector (in a radial direction with respect to the longitudinal direction of the rotor blade) overlaps the intermediate cover. Further, the rain deflector overlaps the intermediate cover over the whole circumference around the rotor blade. This ensures an efficient sealing between the rain deflector and the intermediate cover.

According to an embodiment, the intermediate cover at least partly overlaps an edge of the spinner, which edge defines the blade opening. Partly overlapping means that not necessarily the entire intermediate cover (in a radial direction with respect to the longitudinal direction of the rotor blade) overlaps the spinner, i.e. the edge defining the blade opening. Further, the intermediate cover overlaps the spinner over the whole circumference around the rotor blade. This ensures an efficient sealing between the intermediate cover and the spinner.

According to an embodiment, a seal is arranged at the intermediate cover and/or the blade opening. By providing an additional seal at the location, where a stationary part (spinner) and a movable part (intermediate cover) interact, an even further optimized sealing is achieved between the spinner and the intermediate cover.

According to an embodiment, the rain deflector comprises a strand profile formed as one piece, the strand profile being made from an elastomer material. The strand profile, which is made from one piece and from an elastomer material, enables a rain deflector that can be easily and efficiently installed. This offers a flexible solution, for example an axial position of the deflector can be easily adapted, as will be clear from the below.

The strand profile can be installed on the rotor blade without mechanical impact like drilling a hole in the surface of the rotor blade. For example, no material bond, no fixation means like screws, or the like are necessary. The surface of the blade root is not impacted. This enables that at the installation site, i.e. at a windfarm, no preparatory or additional work is required on the rotor blade to install the rain deflector. The rotor blade can thus be installed quickly after delivery, the so-called "just-in-time" method.

Further, the strand profile provides very high sealing properties to prevent the above-mentioned substances like water from entering the spinner and rotor hub.

Due to the elasticity of the material, the strand profile can be installed on canvases of smaller or larger diameter. Thus, the strand profile can be used for wind turbine rotor blade blades with different diameters of the root portion, wherein only a length of the strand profile needs to be adapted.

Further, due to the elasticity of the material, the strand profile allows you to compensate for unevenness at the outer surface of the root portion. Such unevenness could arise, for example, due to the manufacture of the rotor blade or through the connection of the rain deflector with other components, e.g. the intermediate cover.

For example, the strand profile is fixed on the rotor blade root by at least one tensioning device, which clamps the rain deflector onto the wind turbine rotor blade. Such tensioning device is configured to fix the string profile to the rotor blade in a force-locking manner.

The strand profile is, for example made from ethylene propylene diene monomer rubber. This material is predestined for the above-mentioned advantages and functions.

For installation, the strand profile has a mounting surface which is in contact with the rotor blade's outer surface in the installed state. Here and in the following a vertical direction means orthogonal to mounting surface.

According to an embodiment, opposite longitudinal ends of the strand profile are connected to each other via a connection plate such that the rain deflector forms a loop around the root portion.

The strand profile may not form a fully closed loop around the root portion of the rotor blade. It may be an almost closed loop with a small gap between the longitudinal ends of the strand profile. With the connection plate, the ends are connected to form the closed loop. For example, the plate is screwed onto the longitudinal ends of the strand profile to form the closed loop.

According to an embodiment, the connection plate is made of the same material as the strand profile. Thus, the connection plate advantageously comprises the same material properties (chemical, physical, durability) and the ageing of the component or material is carried out in the same way as the strand profile. Alternatively, an adhesive film can be used to connect the opposite longitudinal ends by filling the space between the opposite longitudinal ends. With this embodiment, the installation process is quicker and easier.

According to an embodiment, any gaps between the longitudinal ends of the strand profile and/or between the longitudinal ends of the strand profile and the connection plate are filled with adhesive material or silicone material. This ensures an ideal sealing function since no harmful substances like water can penetrate through the rain deflector at the connection of the longitudinal ends into the rotor hub or spinner.

According to an embodiment, the strand profile comprises a foot section from which a sealing lip protrudes, wherein the foot section is configured to be directly placed on the outer surface of the root portion. The sealing lip is designed to lie in contact with the intermediate cover to establish the seal. The foot section has the mounting surface which is in contact with the rotor blade's outer surface in the installed state.

According to an embodiment, the sealing lip has a cross section tapering at least in parts in the direction to an outer end of the sealing lip. In other words, the sealing lip tapers in a direction away from the foot section. This makes the sealing lip more flexible towards the outer end and enables good sealing contact with the spinner or other component. In particular, this means that the sealing lip is particularly easy to bend and fits well against the intermediate cover for sealing.

According to an embodiment, the sealing lip has a first section that vertically protrudes from the foot section. Vertical means in a radial direction with respect to a longitudinal direction of the wind turbine rotor blade, if the rain deflector is installed in the loop-like arrangement on the root portion of the rotor blade. This contributes to a high sealing effect.

According to an embodiment, the first section has a cross section tapering in the direction to the outer end of the sealing lip. Thus, for example, only the first section of the sealing lip tapers, whereas other parts of the sealing lip may be design differently, e.g. with a robust wall thickness. This contributes to an optimal design for the sealing function.

According to an embodiment, the sealing lip has a second section, the second section extending from the first section and being inclined at a predetermined angle with respect to the first section. By the second section being inclined with respect to the first section, the second section is - in the installed state on the root portion - directed towards the intermediate cover and thus towards the spinner. This positively contributes to the sealing function.

The above embodiments regarding the sealing lip provide a special profile shape whose main purpose is to minimize deformation of the cross-section when mounted on a cylindrical/round surface like the root portion of the wind turbine rotor blade. This is achieved by the tapered cross-section of the first (e.g. vertical) segment. The longer the first section is, the further away it extends from the axis of rotation of the wind turbine rotor blade and the greater the force acting on it. The thinner the cross-section is, the lower the resistance to forces. Therefore, the material of the strand profile, e.g. elastomer material, expands around the circumference, but there are minimal changes in the cross-section near the profile contour. The height and thickness of the first section depends on the intended height at which the sealing lip, e.g. the second section or portions thereof, shall contact or overlap with the corresponding sealing part, i.e. the intermediate cover.

The second (inclined part) is used directly for overlapping with the corresponding sealing part, i.e. the intermediate cover. The angle of inclination of the second section can theoretically be between 0.1 and 89.9 degrees. Preferably, the angle ranges from 1 to 45 degrees relative to the first section for better gliding. In addition, the total length of the sealing lip depends on a so-called cover portion, which defines a length of a portion of the sealing lip or the second section, which covers or overlaps the intermediate cover. For example, a length of the cover portion is 20 mm. Further, the cover portion also depends on how close the strand profile is arranged close to the intermediate cover with respect to the longitudinal direction of the wind turbine rotor blade.

According to an embodiment, the second section has a cross section having a constant thickness in the direction to the outer end of the sealing lip. For example, a constant thickness of 5 mm is provided. Generally, the thickness depends on a resistance to the influence of external mechanical factors, wherein below a certain thickness of second section, the upper end, e.g. the free end of the sealing lip, may curl up in the opposite direction. i.e. away from the corresponding sealing part, i.e. the intermediate cover. Additionally, the thickness of the second section is chosen such, that the sealing lip has a certain flexibility, which allows it to cling to the surface of the corresponding sealing part.

According to an embodiment, the foot section has a first groove and a second groove. The first groove accommodates a first tensioning device, and the second groove accommodates a second tensioning device. The tensioning devices are configured to fix the rain deflector on the rotor blade in a clamping manner.

Each groove serves as a guidance for a respective tensioning device to fixate the rain deflector on the root portion. In particular, a tensioning device is accommodated in a respective groove in a form-fit manner. The tensioning devices are thus securely held at the rain deflector, in particular during operation of the wind turbine rotor blade.

Each tensioning device may comprise a band, particularly a metal band, accommodated in the respective groove, wherein the two ends of the band are connected to each other via an adjusting device for setting a tensioning force, which force acts to fix the rain deflector onto the rotor blade root. This contributes to the above-mentioned functions and advantages.

According to an embodiment, the two grooves are arranged at opposite sides of the sealing lip. This avoids a tilting of the sealing lip and secures the rain deflector securely and stably on the rotor blade.

According to an embodiment, in the region of at least one groove, the foot section has a slot-like recess which extends at least partially below the at least one groove in a direction away from the sealing lip. In other words, there is a slit under the respective groove. "Under" means at the bottom of the groove or at the side facing the rotor blade. The slot-like recess extends in a direction along the mounting surface (see above) of the foot section or the strand profile. The slot-like recess provides additional safety. When rotating, the wind turbine rotor blade experiences deformations on its surface. And this also applies to the rain deflector and to the one or more tensioning devices. This in turn leads to a cutting effect between the tensioning device, e.g. the metal band, and the strand profile. Without this slot-like recess, the cutting effect directly acts into the vertical main segment. Dut to this slot-like recess, the tensioning device only cuts the inner wall of the respective groove. In the worst case (if the inner wall is completely cut), the cutting edge remains in the air and the first section, e.g. the vertical section, remains intact.

According to a second aspect, intermediate cover for a rotor hub of a wind turbine, the intermediate cover being configured to be arranged in a circumferential gap between a spinner of the rotor hub and the rain deflector in order to seal the circumferential gap between the spinner and a rain deflector according to any one of claims 1 to 12 such that both the rain deflector and the intermediate cover prevent water from entering the rotor hub.

Further advantages, features and functions, which are explained in conjunction with the figures, are given in the following exemplary embodiments of the invention. Identical, similar or similarly acting elements are provided with the same reference signs in the figures.

In the figures:
Figure 1 shows a schematic view of a wind turbine,
Figure 2 shows a schematic view of the rotor hub of the wind turbine,
Figure 3 shows a schematic perspective partial view of a spinner of the rotor hub and a wind turbine rotor blade with a rain deflector according to an embodiment of the invention,
Figure 4 shows a schematic view onto the wind turbine rotor blade from the root end with the rain deflector,
Figure 5 shows a cross-sectional view of the rain deflector,
Figure 6 shows a schematic view of longitudinal ends of the rain deflector being coupled to one another, and
Figure 7 shows a schematic perspective partial view of the rotor blade and two tensioning devices,
Figure 8 shows a schematic perspective view of a spinner and a wind turbine rotor blade with the rain deflector and an intermediate cover according to an embodiment of the invention, and
Figures 9 and 10 show partial cross-sectional views of the spinner of figure 8.

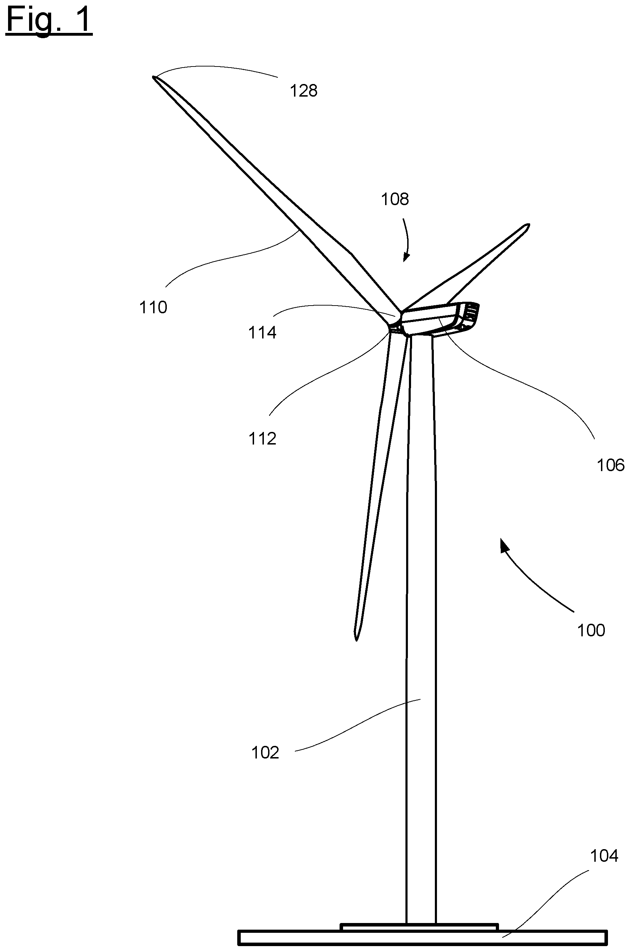

Figure 1 shows a schematic view of a wind turbine 100, which comprises a tower 102. The tower 102 is fixed to the ground by means of a foundation 104. At one end of the tower 102 opposite to the ground a nacelle 106 is rotatably mounted.

The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the mechanical energy of the rotor 108 into electrical energy.

Each rotor blade 110 comprises a root portion 114 which is the portion closest to the rotor hub 112.

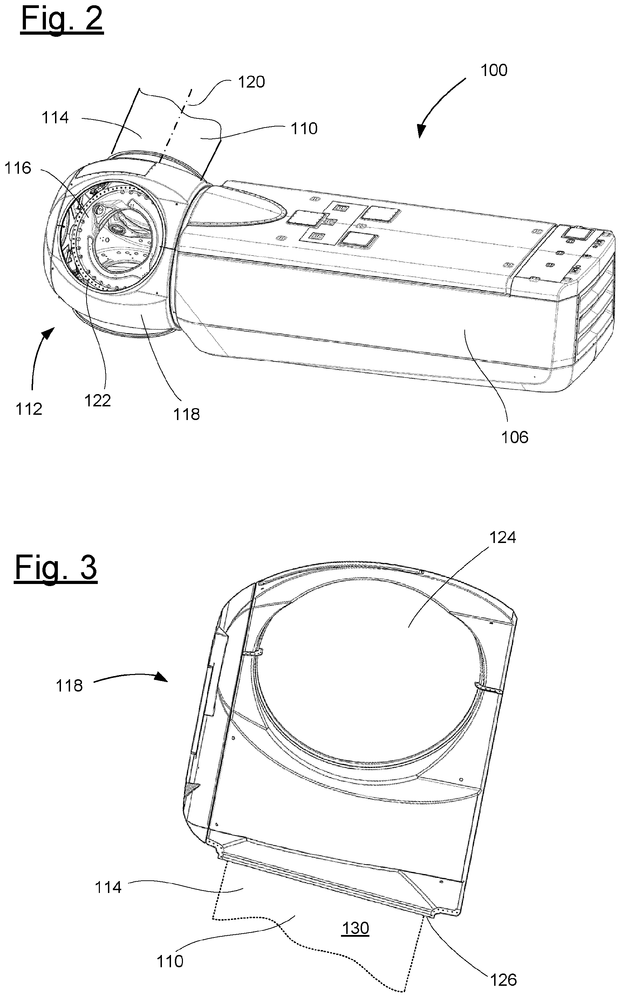

Figure 2 shows a schematic view of the rotor hub 112 and the nacelle 106 of the wind turbine 100. The rotor hub 112 includes a hub body 116 to which a spinner 118 is attached. The spinner 118 is indicated by dotted lines in figure 2 and is a cover for the hub body 116. The hub body 116 is the main structural member of the rotor hub 112 and is the component to which the rotor blades 110 are attached. The hub body 116 is coupled to a main rotor shaft (not shown) of the wind turbine 100. In figure 2 only one of the rotor blades is schematically shown. The positional relationship between the hub body 116, the spinner 118 and the rotor blades 110 (only one is shown in figure 2) can be exemplarily derived.

The spinner 118 is an aerodynamic fairing, usually being a composite plastics construction, which protects the internal hydraulic and electrical systems (not shown) that are housed within the hub body 116 from the external environment impacts. As can be seen, the hub body 116 includes a blade connection 122 for each rotor blade 110. Each blade connection 122 comprises a blade bearing (not shown) which typically has a circular flange to which the root portion 114 of the respective rotor blade 110 is attached. A pitch system (not shown) is housed within the hub body 116 and functions to rotate the pitch bearing and, thus, also the rotor blade 110 about its longitudinal axis 120. Such an arrangement is typical in wind turbine design and so will not be described in further detail here for brevity.

Figure 3 shows a perspective partial view of an exemplary spinner 118. One of the rotor blades 110 is indicated by dotted lines. As can be seen, in this view the blade 110 extends laterally from the spinner 118 through one of the three rotor blade openings 124.

It must be ensured that the rotor blade 110 can pitch around its longitudinal axis 120. Further, for maintenance or repair reasons a pitch bearing and/or an extender housed within the spinner 118 has to be disassembled and moved through the blade opening 124. Therefore, the blade opening 124 of the spinner 118 defines a sufficiently wide circumferential gap 126 around the blade root portion 114. However, for example during wet weather, this gap 126 is an entrance gate through which water can enter the interior of the spinner 118 and, therefore, to or into the rotor hub 112.

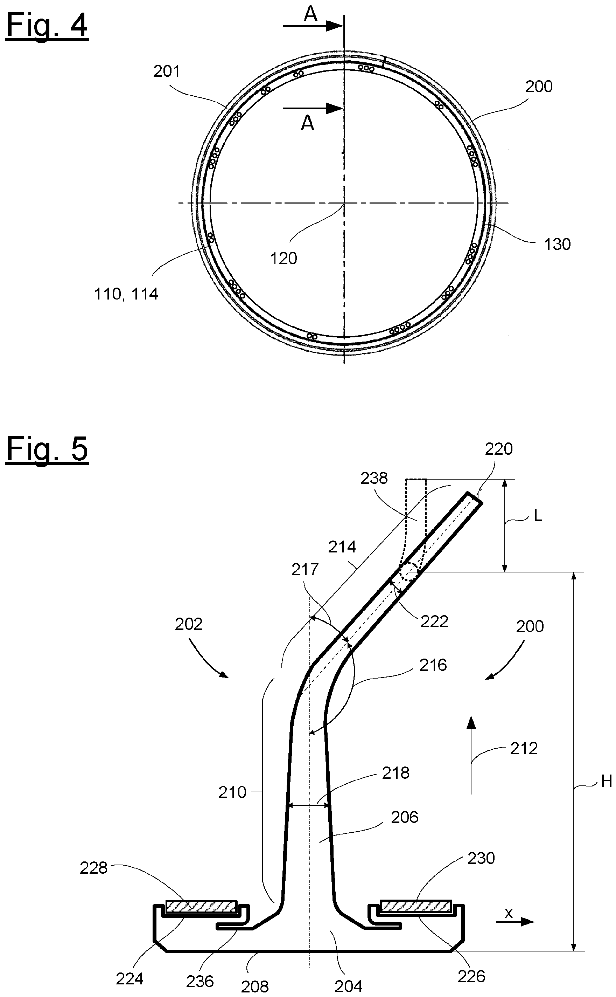

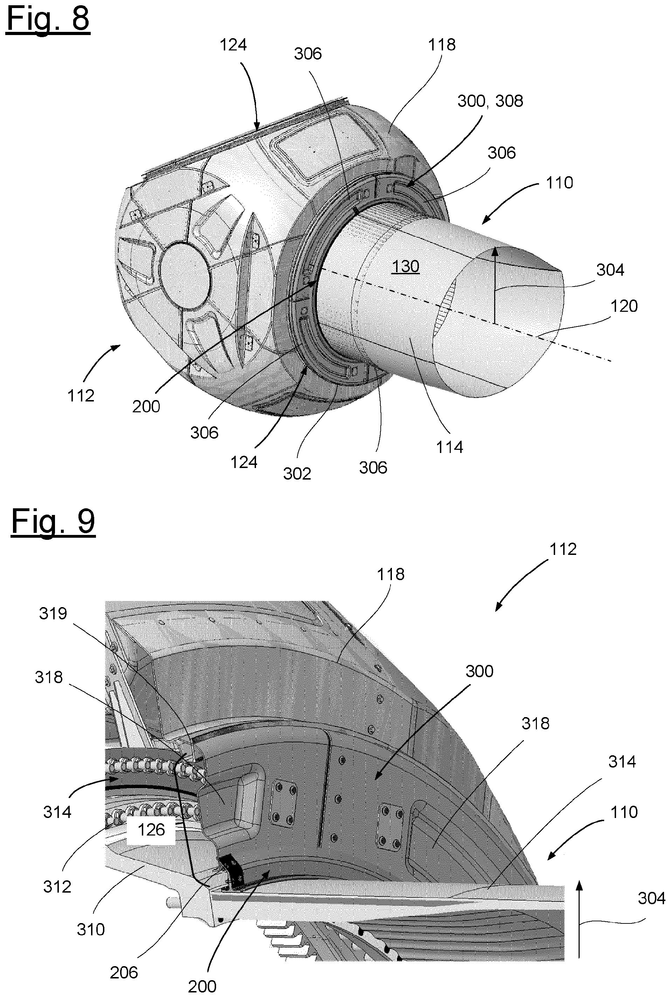

In the following, a cover system comprising an intermediate cover 300 (see figures 8 to 10) and a rain deflector 200 according to an embodiment of the invention is described. The cover system is designed to be installed in the gap 126 to protect the rotor hub 112 from ingress of any substances like water. The rain deflector 200 is configured to be installed on the root portion 114 of the rotor blade 110 and is described in more detail with the help of figures 4 to 7. The intermediate cover 300 is arranged between the spinner 118 and the rain deflector 200 and will be described with the help of figures 8 to 10.

Figure 4 shows a schematic view onto the root portion 114 of the wind turbine rotor blade 110 in the direction towards a tip 128 of the rotor blade 110. The rain deflector 200 is placed on the outer surface 130 of the root portion 114 of the wind turbine rotor blade 110. The rain deflector 200 comprises a strand profile 202 (see figure 5) formed as one piece. The rain deflector 200 is placed such on the outer surface 130 that the strand-profile 202 surrounds the root portion 114 to form a loop 201.

Figure 5 shows a cross-sectional view of the rain deflector along cross section A-A (see figure 4). The strand profile 202 is made from an elastomer material like ethylene propylene diene monomer rubber. The strand profile 202 comprises a foot section 204 from which a sealing lip 206 protrudes. The foot section 204 comprises a mounting surface 208 at the bottom of the rain deflector 200. With the foot section 204 and in particular with the mounting surface 208, the strand profile 202 is directly placed on the outer surface 130 of the root portion 114.

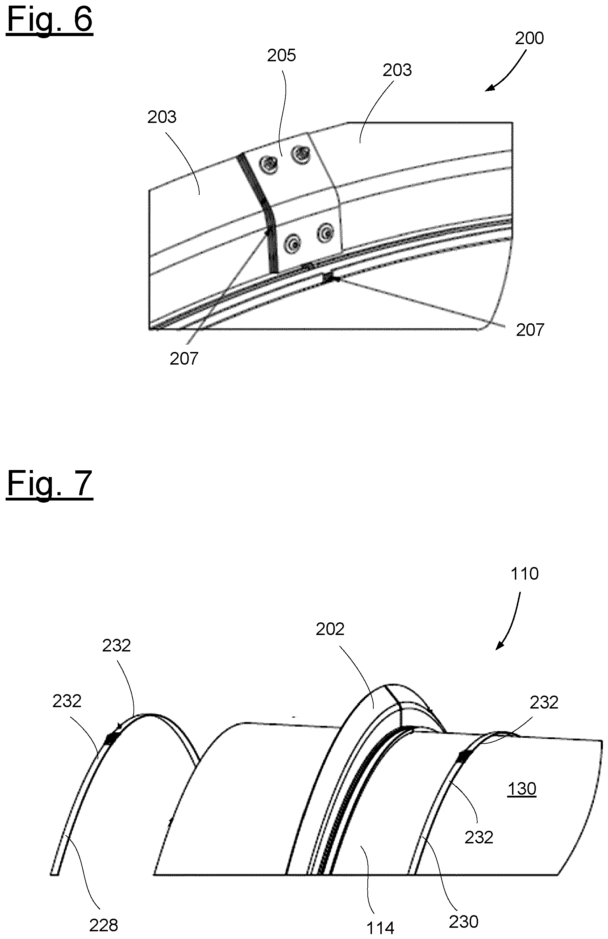

To form a closed loop 201 as shown in figure 4, opposite longitudinal ends 203 of the strand profile 202 are fixedly connected via a connection plate 205 as shown in figure 6. The connection plate 205 is made from the same material as the strand profile 202. Here, the connection plate 205 is screwed onto the longitudinal ends 203 of the strand profile 202 by means of four screws to form the closed loop 201. Any remaining gaps between the longitudinal ends 203 of the strand profile 202 as well as between the longitudinal ends 203 and the connection plate 205 are filled with a sealing material 207, e.g. a silicone material (see figure 6).

Referring back to figure 5, the sealing lip 206 has a first section 210 that protrudes from the foot section 204, in the example in a vertical direction 212. Alternatively, the first section 210 can also be in a certain angle with respect to the foot section 204, e.g. between 0° degree to 35°. The vertical direction 212 is meant to be orthogonal to the longitudinal direction 120 of the rotor blade 110. The sealing lip 206 further has a second section 214, the second section 214 extending from the first section 210 and being inclined at a predetermined angle 216, e.g. 45°, with respect to the first section 214.

As can be seen from figure 5, the first section 210 has a cross section 218 (or wall thickness) tapering in direction to an outer end 220 (also named free end) of the sealing lip 206. Whereas, in the shown example, the second section 214 has a cross section 220 (or wall thickness) having a constant thickness in the direction to the outer end 220 of the sealing lip 206.

Furthermore, the foot section 204 has a first groove 224 and a second groove 226. The two grooves 224, 226 are arranged at opposite sides of the sealing lip 206. The first groove 224 is designed to accommodate a first tensioning device 228, and the second groove 226 is designed to accommodate a second tensioning device 230 (see also partial explosion view of figure 7). The tensioning devices 228 and 230 are configured to fix the rain deflector 200 on the rotor blade 110 in a clamping manner, as already described above. Each tensioning device 228, 230 is mainly defined by a metal band, which is accommodated in the respective groove 224, 226 (see figure 5, not shown in figure 7). The opposing ends 232 of each metal band are connected to each other via an adjusting device 234 for setting a tensioning force, which force acts to fix the rain deflector 200 onto the root portion 114. For example, the adjusting device 234 comprises a worm thread, wherein the ends 232 are screwed together such that the respective metal band ties around the root portion 114.

As can be further seen from figure 5, in the region of each of the grooves 224, 226, the foot section 204 has a slot-like recess 236 which extends at least partially below the respective groove 224, 226 in a lateral direction away from the sealing lip 206. In other words, there is a slit under the respective groove 224, 226. The slot-like recesses 236 extend in a direction along (in parallel to) the mounting surface 208 of the foot section 204 (or the strand profile 202 respectively).

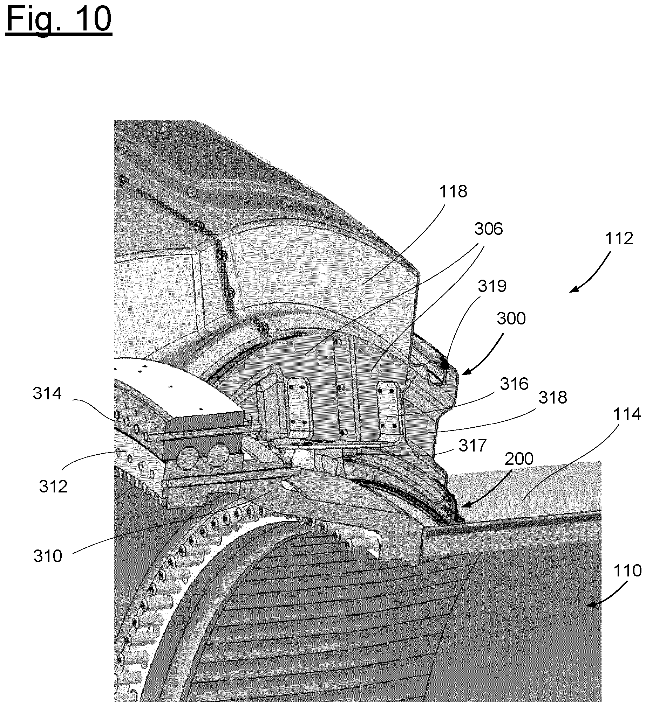

In an installed state, the rain deflector 200 and in particular its sealing lip 206 is in a sealing contact to the intermediate cover 300. Figure 8 shows the spinner rotor hub 112 with the spinner 118, the intermediate cover 300, the rain deflector 200 and a wind turbine rotor blade 110 in a perspective view. Figures 9 and 10 show cross-section views of the rotor hub 112.

The wind turbine rotor blade 110 is inserted with its root portion 114 into the blade opening 124 of the spinner 118. The circumferential gap 126 being defined as the space between the edge 302, which defines the blade opening 124, and the root portion 114 of the rotor blade 110, is covered by the intermediate piece 300 and the rain deflector 200 in order to prevent any ingress of water and the like into the rotor hub 112.

As can be seen from figures 8 to 10, the rain deflector 200 at least partly overlaps the intermediate cover 300 in a radial direction 304 with the sealing lip 206 over the entire circumference with respect to the root portion 114. The intermediate cover 300 at least partly overlaps the edge 302 of the spinner 118.

Figure 5 further details how a sealing contact of the rain deflector 200 with the intermediate cover 300 is established. If the sealing lip 206 gets in sealing contact with the intermediate cover 300, due to the special strand profile 202 as described, a cover portion 238, which is a portion of the sealing lip 206, in particular of the second section 214, is bent with an angle 217 in an opposition direction with respect to the inclination of the second section 214 with regard to the first section 210. The angle 217 is the supplementary angle to angle 216. The cover portion 238 is indicated with dotted lines in figure 5, indicating the state in which there is a sealing contact with the intermediate cover 300.

A height and thickness of the first section 210 depends on a height H (see figure 5) at which the overlap with the intermediate cover 300.

The second (inclined) section 214 is used directly for overlapping with the intermediate cover 300. The angle of inclination of the second section 214 with regard to the first section 210 is 45°. In addition, a total length of the sealing lip 206 depends on the length L (see figure 5) of the cover portion 238. Further, the cover portion 238 and its length L also depends on how close the strand profile 202 can be arranged in direction X (see figure 5) to the intermediate cover 300.

The intermediate cover 300 is comprised of several cover segments 306 (here four) which are joined end-to-end to form a loop 308.

In the present embodiment, the wind turbine rotor blade 110 is fixedly connected to an extender 310, e.g. by a plurality of screw bolt connections. The extender 310 is used to connect the rotor blade 110 to the inner ring 312 of a pitch bearing 314. Therefore, the extender 310 is fixedly connected to the inner ring 312, e.g. by a plurality of screw bolt connections. Since the rotor blade 110 has a smaller outer diameter at the root portion 114 than the inner ring 312, the extender 310 expands to compensate for the diameter offset.

As shown in figure 10 in more detail, the intermediate cover 300 comprises several holding structures 316 (here four). Each holding structure 316 is made of metal and is a V-shaped mounting bracket. Each holding structure 316 interconnects two cover segments 306. Further, each holding structure 316 is fixedly connected to the extender 310. The extender provides protrusions 317 for the assembly of the holding structure 316. Through the connection of the extender 310 to the inner ring 312 of the pitch bearing, the intermediate cover 300 is in rotationally fixed connection with the inner ring 312 via the extender 310. In operation of the wind turbine 100, if the wind turbine rotor blade 110 rotates (e.g. for pitching), the intermediate cover 300 rotates along with it.

Further, the intermediate cover 300 comprises several beads 318 for reinforcement. Here, each cover segment 306 comprises one bead 318, which extends over at least 80 % of the length of the arc-like cover segment 306.

Further, a seal 319 is arranged between the intermediate cover 300 and the rotor blade opening 124 of the spinner 118. In the shown embodiment the seal 319 is fixedly arranged at the edge of the rotor blade opening 124.

### Reference signs

- 100: wind turbine
- 102: tower
- 104: foundation
- 106: nacelle
- 108: rotor
- 110: wind turbine rotor blade
- 112: rotor hub
- 114: root portion
- 116: hub body
- 117: motor shaft
- 118: spinner
- 120: longitudinal axis
- 122: rotor blade connection
- 124: rotor blade opening
- 126: circumferential gap
- 128: tip
- 130: outer surface

- 200: rain deflector
- 201: loop
- 202: strand profile
- 203: longitudinal end
- 204: foot section
- 205: connection plate
- 206: sealing lip
- 207: adhesive material
- 208: mounting surface
- 210: first section
- 212: vertical direction
- 214: second section
- 216: angle
- 218: cross section
- 220: outer end
- 222: cross section
- 224: first groove
- 226: second grove
- 228: first tensioning device
- 230: second tensioning device
- 232: ends
- 234: adjusting device
- 236: slot-like recess
- 238: cover portion

- H: height
- L: length
- X: direction

- 300: intermediate cover
- 302: edge
- 304: radial direction
- 306: cover segment
- 308: loop
- 310: extender
- 312: inner ring
- 314: pitch bearing
- 316: holding structure
- 317: protrusion
- 318: bead
- 319: seal

## Claims

1. Wind turbine (100), comprising
- a rotor hub (112) with a spinner (118), wherein the spinner (118) comprises a blade opening (124),
- a wind turbine rotor blade (110) which is inserted with its root portion (114) into the blade opening (124) and connected to the rotor hub (112),
- a rain deflector (200), the rain deflector (200) being arranged on an outer surface (130) of the wind turbine rotor blade (110) such that it surrounds the root portion (114) of the wind turbine rotor blade (110),
- an intermediate cover (300), which is configured to be arranged in a circumferential gap (126) between the spinner (118) and the rain deflector (200) in order to seal the circumferential gap (126) between the spinner (118) and the rain deflector (200) such that both the rain deflector (200) and the intermediate cover (300) prevent water from entering the rotor hub (112).

2. Wind turbine (100) according to claim 1, wherein the intermediate cover (300) is connected to an inner ring (312) of a pitch bearing (314) or to an extender (310) assembled between the rotor hub (112) and the wind turbine rotor blade (110) .

3. Wind turbine (100) according to claim 2, wherein the intermediate cover (300) comprises one or more holding structures (316) for connection to the inner ring (312) of the pitch bearing (314) or to the extender (310).

4. Wind turbine (100) according to claim 3, wherein the one or more holding structures (316) are connected to the extender (310), and via the extender (310) with the inner ring (312) of the pitch bearing (314).

5. Wind turbine (100) according to any one of the preceding claims, wherein the intermediate cover (300) is comprised of two or more cover segments (306) which are joined end-to-end to form a loop (308).

6. Wind turbine (100) according to claim 5 in conjunction with claim 3, wherein the intermediate cover (300) comprises at least two or more holding structures (316), and wherein each of the holding structures (316) interconnects two cover segments (306).

7. Wind turbine (100) according to any one of the preceding claims, wherein the intermediate cover (300) comprises one or more beads (318).

8. Wind turbine (100) according to any one of the preceding claims, wherein the rain deflector (200) at least partly overlaps the intermediate cover (300).

9. Wind turbine (100) according to any one of the preceding claims, wherein the intermediate cover (300) at least partly overlaps an edge (302) of the spinner (118), the edge (302) defining the blade opening (124).

10. Wind turbine (100) according to any one of the preceding claims, wherein a seal is arranged at the intermediate cover (300) and/or the blade opening (124).

11. Wind turbine (100) according to any one of the preceding claims, wherein the rain deflector (200) comprises a strand profile (202) formed as one piece, the strand profile (202) being made from an elastomer material.

12. Wind turbine (100) according to claim 11, wherein opposite longitudinal ends (203) of the strand profile (202) are connected to each other such that the rain deflector (200) forms a loop (201) around the root portion (114).

13. Wind turbine (100) according to claim 11 or 12, wherein the strand profile (202) comprises a foot section (204) from which a sealing lip (206) protrudes, wherein the foot section (204) is configured to be directly placed on the outer surface (130) of the root portion (114).

14. Wind turbine (100) according to claim 13, wherein
- the foot section (204) has a first groove (224) and a second groove (226),
- the first groove (224) accommodates a first tensioning device (228), and the second groove (226) accommodates a second tensioning device (230), and
- the tensioning devices (228, 230) are configured to fix the rain deflector (200) on the rotor blade (110) in a clamping manner.

15. Intermediate cover (300) for a rotor hub (112) of a wind turbine (100), the intermediate cover (300) being configured to be arranged in a circumferential gap (124) between a spinner (118) of the rotor hub (112) and the rain deflector (200) in order to seal the circumferential gap (124) between the spinner (118) and a rain deflector (200) such that both the rain deflector (200) and the intermediate cover (300) prevent water from entering the rotor hub (112).
